# EUROPÄISCHE PATENTSCHRIFT

(11) **EP 0 381 047 B1**
(45) Veröffentlichungstag und Bekanntmachung des Hinweises auf die Patenterteilung: **31.08.1994**
(21) Anmeldenummer: 90101465.4
(22) Anmeldetag: 25.01.1990
(51) Int. Cl.: C09B 67/08, C09D 7/12, C08K 9/02, A61K 7/00, C09D 11/02

(54) **Metalloxidbeschichtete Glanzpigmente**
Glossy pigments coated with a metal oxide
Pigments brillants recouverts d'une couche d'oxyde métallique

(30) Priorität: 02.02.1989 DE 3903023
(43) Veröffentlichungstag der Anmeldung: 08.08.1990
(73) Patentinhaber: BASF Aktiengesellschaft, 67063 Ludwigshafen (DE)
(72) Erfinder: Mronga, Norbert, Dr., D-6915 Dossenheim (DE); Ostertag, Werner, Dr., D-6718 Gruenstadt (DE); Bock, Gustav, Dr., D-6730 Neustadt (DE)

(56) Entgegenhaltungen:
- EP-A- 0 045 851
- US-A- 4 012 232
- JAPANESE PATENTS GAZETTE Sektion CH, Woche X18, 9 Juni1976 Derwent Publications Ltd., London GB
- PATENT ABSTRACTS OF JAPAN vol. 14, no. 8 (P-987)(3951)10. Januar 1990 & JP-A 1 257 860 (SONY CORP.) 13. Oktober 1989

## Beschreibung

Die vorliegende Erfindung betrifft neuartige Glanzpigmente und ein Verfahren zu ihrer Herstellung.

Glanz- oder Effektpigmente erfreuen sich in den letzten Jahren in vielen Bereichen der Technik und der dekorativen Kosmetik wachsender Beliebtheit. Sie zeichnen sich aus durch gerichtete Reflexion an flächig ausgerichteten, orientierten Pigmentpartikelchen (DIN 55944 - 1.1.2.4.) mit plättchenförmigem Habitus und großem Korndurchmesser. Je nachdem, ob die Reflexion an einer metallischen oder einer hochbrechenden transparenten Phase erfolgt, spricht man von Metalleffekt- oder von Perlglanzpigmenten. Unterscheidet man noch zwischen ein- und mehrphasigen Pigmenten, so lassen sich die meisten der verwendeten Glanzpigmente in die in der Tabelle 1 dargestellten Systematik einordnen.

**Tabelle 1**

| Aufbau von Glanzpigmenten | | |
|---|---|---|
| | einphasig | mehrphasig |
| transparent oder semitransparent (Perlglanzpigmente) | nat. Fischsilber, BiOCl, α-Fe₂O₃ PbCO₃·Pb(OH)₂, spez. β-Kupferphthalocyanin | Substrate: Glimmer, α-Fe₂O₃ Beschichtungen: Fe₂O₃, TiO₂, Cr₂O₃, oxidische Mischphasen, Berliner Blau |
| deckend (Metalleffektpigmente) | Aluminium, Messing- und Kupferbroncen | Substrate: Aluminium, Messing- und Kupfer Beschichtungen: Fe₂O₃, TiO₂, Kupferoxide |

Glanzpigmente können farblos oder farbig auftreten. Bei den farbigen Glanzpigmenten beruht die Farbigkeit vorwiegend auf Absorption. Eine von den Absorptionsfarben abweichende Farbe können die mehrphasigen Pigmente aufgrund von Interferenzerscheinungen an der Beschichtung von Plättchen ausbilden. Bekanntes Beispiel dafür sind die mit TiO₂-Filmen beschichteten Glimmerpigmente, die in verschiedenen Farbtönen im Handel sind.

Der Farbeindruck von Interferenzfarben, welche an filmartigen Beschichtungen erzeugt werden, ist je nach Farbe des Untergrundes, über dem sie appliziert sind, sehr unterschiedlich. Über weißem Untergrund erscheinen sie undeutlich und sehr farbschwach, während sie beispielsweise über schwarzem Untergrund deutlicher und wesentlich intensiver erscheinen. Dies hängt damit zusammen, daß ein schwarzer Untergrund das Durchlicht, welches die komplementäre Farbe zum reflektierten Licht aufweist, total absorbiert, so daß diese vom Untergrund nicht mehr remittiert werden kann und somit auch nicht mehr die reflektierte Interferenzfarbe beeinträchtigt. Über farbigem Untergrund wird nur ein Teil des Durchlichtes absorbiert. Das vom Untergrund remittierte Licht kann dann mit dem reflektierten Interferenzlicht zusammenwirken und es entstehen neue originelle Farbeindrücke.

Dieser in der Kosmetik bekannte Effekt, daß Perlglanzpigmente mit Interferenzfarben, z.B. mit TiO₂ beschichtete Glimmerplättchen, in Abhängigkeit von der Hautfarbe (Untergrund) eine andere Wirkung zeigen, hat man durch Zumischen von schwarzen oder gefärbten Pigmenten nachzustellen versucht. Die gleichzeitige Verarbeitung unterschiedlicher Pigmente ist jedoch mit Schwierigkeiten verbunden, so daß solche Mischungen in der Praxis keinen Eingang gefunden haben.

Perlglanzpigmente mit Interferenzfarben bestehen üblicherweise aus (farblosen) Glimmerschuppen als Substrat und darauf aufgebrachten durchscheinenden Oxidschichten, insbesondere Titandioxid, Eisen(III)- oder Eisen(II, III)- aber auch Zirkondioxid, Chrom(III)-oxid, Vanadin(V)-oxid oder deren Hydrate (vgl. DE-PS 1 467 468). Bei Verwendung von farbigen Substraten können besondere Effekte erzielt werden, was auf die Kombination von Interferenz- mit Absorptionsfarben zurückzuführen ist. Die Auswahl an farbigen anorganischen plättchenförmigen Substraten beschränkt sich jedoch auf einige wenige Substanzen. In der DE-PS 20 09 566 ist z.B. Graphit erwähnt. In der US-PS 4 373 963 sind plättchenförmige, rote Pigmente aus Eisenoxid, die Aluminiumoxid in fester Lösung enthalten, beschrieben, die mit Titandioxid beschichtet sein können. In der DE-OS 37 09 217 werden plättchenförmige Pigmente beschrieben, die neben Aluminium- und Eisenoxiden zusätzlich Manganoxid enthalten und die je nach Teilchengröße eine rötlich-gelbe bis schwarze Farbe besitzen und die zur Erzeugung von Glanzpigmenten mit hochbrechenden Oxidfilmen wie TiO₂ und Fe₂O₃ beschichtet werden können. Im letzteren Fall handelt es sich um eine farbige Beschichtung die aufgrund der Eigenfarbe des Eisenoxids nur im gelb/roten Farbbereich brillante Farbtöne liefert. Schwarz-gelbe, schwarz-rote bis rein schwarze plättchenförmige Pigmente auf Basis von Aluminium- und Eisenoxiden sind in der DE-OS 36 36 076 beschrieben, die ebenfalls als Substrate für Perlglanzpigmente dienen können und zu diesem Zweck mit farblosen oder farbigen Oxiden beschichtet werden können.

Zusammenfassend kann festgestellt werden, daß für die Herstellung von Perlglanzpigmenten im wesentlichen plättchenförmiger farbloser Glimmer als Substrat in Betracht kommt, daß aber auch farbige oder schwarze Substrate eingesetzt werden können, wobei allerdings die Auswahl auf einige wenige Verbindungen mit einer geringen Auswahl an Farbtönen beschränkt ist.

Der vorliegenden Erfindung lag daher die Aufgabe zugrunde, Glanzpigmente bestehend aus einem farbigen Träger und darauf aufgebrachten filmartigen Umhüllungen aus Metalloxiden bereitzustellen, bei denen man auf Träger mit einer breiten Farbpalette zurückgreifen kann. Der Erfindung lag die weitere Aufgabe zugrunde, Verfahren zur Herstellung solcher Pigmente anzugeben.

Es wurde gefunden, daß diese Aufgabe dadurch gelöst werden kann, daß der Träger ein plättchenförmiges organisches Farbpigment ist.

Bisher sind Glanzpigmente, die aus einem plättchenförmigen organischen Farbpigment und darauf aufgebrachten TiO₂-, Fe₂O₃ oder anderen hochbrechenden Metalloxidumhüllungen bestehen, nicht bekannt geworden, was nicht zuletzt darauf zurückzuführen sein dürfte, daß es präparativ schwierig ist, ein hydrophobes organisches Pigment mit einem fest haftenden hydrophilen anorganischen Belag zu versehen.

Als Träger kommen erfindungsgemäß organische Farbpigmente in Betracht die plättchenförmig sind, d.h., daß sie eine Länge von 3 bis 150 µm, vorzugsweise 5 bis 70 µm, eine Breite von 3 bis 150 µm, vorzugsweise 5 bis 50 µm, und eine Dicke von 0,1 bis 2 µm aufweisen. Sie sollen naturgemäß beständig sein, d.h. in anderen Worten, daß sie sich unter den Bedingungen, unter denen die filmartigen Umhüllungen aus anorganischen Oxiden aufgebracht werden, nicht zersetzen. Die Farben der erfindungsgemäßen Pigmente werden bestimmt durch die Absorptionsfarbe des organischen Trägerpigments sowie der Interferenzfarbe der aufgebrachten Umhüllung aus anorganischen Oxiden, die wiederum durch die Dicke dieser Oxidschicht varriert werden kann.

Besonders geeignete organische Farbpigmente sind z.B. β-Kupferphthalocyaninpigmente, wie sie in der EP-OS 0 042 507 beschrieben sind. Diese Pigmente sind besonders bevorzugt, da über ihrer rotstichig blauen Eigenfarbe besonders attraktive Interferenzfarben wahrgenommen werden können. Geeignet sind ferner auch Perylen-Pigmente, das sind Diimide der 3, 4, 9, 10 Perylentetracarbonsäure oder Fluororubin-Pigmente. Pulverförmige Pigmente lassen sich durch die bekannten Methoden der Umkristallisation in plättchenförmige Pigmente überführen. Durch Variationen der Schichtdicken der Umhüllungen aus anorganischen Oxiden läßt sich durch die damit verbundene Variation der Interferenzfarben bei gegebenem Trägermaterial aus organischem Farbpigment eine Vielzahl von Glanzpigmenten mit unterschiedlichen Farbnuancen herstellen. Die anorganischen Schichten besitzen eine hohe Brechzahl von n > 2, während die organischen Farbpigmentträger einen niederen Brechungsindex aufweisen, d.h. die Brechung liegt deutlich unter 2 (n < 2). Damit unterscheiden sich diese Pigmente nur wenig von der Brechzahl des sie umgebenden Lackmediums. Durch die Aufbringung der stark brechenden Oxidumhüllungen wird der Anteil des von der Pigmentoberfläche reflektierten Lichtes angehoben, wodurch entsprechend den Gesetzen der Optik (Fresnel-Gleichung) die organischen Pigmentträger deutlich sichtbar werden. Die anorganischen Schichten haben z.B. folgende Brechzahlen: Anatas n=2,4; Rutil n=2,7, Fe₂O₃ n=2,8, ZrO₂=2,4 und Magnetit n=2,4. Um das Reflexionsverhalten der erfindungsgemäßen Pigmente zu erhöhen, ist nur eine relativ dünne Beschichtung bis ca. 35 nm erforderlich. Erhöht man die Dicke der Beschichtung darüber hinaus, treten Interferenzerscheinungen auf und es kommt zu dem oben beschriebenen Farbenspiel.

Die erfindungsgemäßen Pigmente können gemäß einem weiteren Gegenstand der Erfindung zweckmäßig nach dem Chemical-Vapor-Deposition-Verfahren (CVD-Verfahren) hergestellt werden. Hierbei werden die organischen Farbpigmente im Wirbelzustand gehalten, und es werden gasförmige Verbindungen der Metalle, deren Oxide die gewünschten Umhüllungen bilden sollen, mit ebenfalls gasförmigen Verbindungen unter Bildung der gewünschten Oxide zur Umsetzung gebracht. Als gasförmige Metallverbindungen seien beispielsweise die Carbonyle und Chloride erwähnt. Zur Herstellung von Oxidumhüllungen des Ti, V und Zr geht man z.B. von TiCl₄, VCl₄- und ZrCl₄ aus, die man in der Gasphase in der Wirbelschicht der organischen Farbpigmentträger mit Wasserdampf zu den entsprechenden Oxiden umsetzt. Im Falle von Umhüllungen des Eisens und Chroms geht man vorteilhaft von den entsprechenden Carbonylverbindungen Fe(CO)₅- und Cr(CO)₆ aus, die man mit Sauerstoff in die entsprechenden Oxide überführt. Die stark vereinfachten Bilanzgleichungen sind folgende: 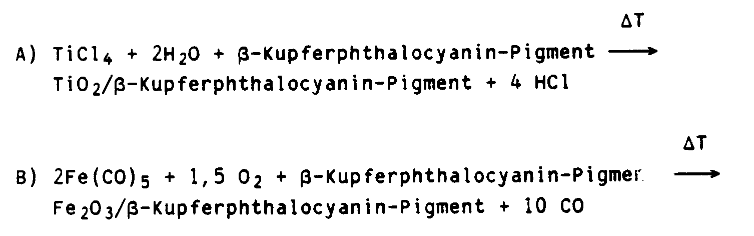
Hiermit gelingt es, Interferenzfarben aufweisende, hochglänzende Glanzpigmente mit hoher Farbintensität zu erzeugen.

Als Substrat werden z.B. die oben beschriebenen plättchenförmigen organischen Farbpigmente eingesetzt. Die erwünschte Teilchengröße der Pigmente ist oben bereits angegeben. Die spezifische freie Oberfläche (BET, N₂-Absorption) des Farbpigmentes liegt zwischen 0,5 bis 5 m²/g. Die Oberfläche der Plättchen sollte weitgehend frei von Fetten oder anderen Belegungsmitteln sein.

Im einzelnen wird z.B. bei der TiO₂- bzw. Fe₂O₃-Belegung von plättchenförmigen organischen Farbpigmente so vorgegangen, daß trockenes Pigment in einen beheizbaren Wirbelbettreaktor aus Glas oder Metall eingefüllt und mit Wirbelluft fluidisiert wird. Um Austrag von feinen Teilchen zu verhindern, ist der Wirbelreaktor am Kopfende zweckmäßigerweise mit einem abreinigbaren Filter versehen.

Das Wirbelgut wird über eine Wandbeheizung oder IR-Strahler auf 100 bis 280°C aufgeheizt. Als Reaktionstemperatur besonders vorteilhaft erwies sich der Bereich zwischen 180 und 240°C. Um elektrostatischen Aufladungen vorzubeugen, die sich negativ auf das Wirbelverhalten des Pigments auswirken, wird während des Aufheizens Wasserdampf ins Wirbelbett geleitet. Dies erfolgt zweckmäßigerweise dadurch, daß man das Wirbelgas oder einen Teil des Wirbelgases durch temperiertes Wasser leitet, wo es sich mit Wasserdampf belädt. Wasserdampf kann auch separat über eine Düse seitlich am Wirbelbett eingetragen werden. Ist die gewünschte Endtemperatur des Wirbelbettes erreichte so wird über eine weitere, seitlich am Wirbelbett angebrachte Düse TiCl₄- bzw. Fe[CO]₅-Dampf in das Wirbelbett eingeleitet. Vorteilhaft geht man dabei so vor, daß ein inertes Trägergas, z.B. Stickstoff, mit der gewünschten Menge an TiCl₄ bzw. Fe[CO]₅ beladen wird.

Für die Ausbildung qualitativ hochwertiger, d.h. gleichförmiger filmartiger Metalloxid-Beläge auf der Oberfläche der plättchenförmigen organischen Pigment-Partikel ist es wichtig, das TiCl₄ bzw. Fe(CO)₅ nur in geringer Konzentration ins Wirbelbett eingetragen wird. Diese Stoffe können dort mit dem Überschuß an Reaktionspartner (Wasserdampf bzw. Sauerstoff) reagieren.

Versuche haben gezeigt, daß, bezogen auf die Gesamtmenge der übrigen ins Wirbelbett eingeleiteten Gase bzw. Dämpfe, für TiCl₄- bzw. Fe[CO]₅-Dampf ein Wert von 5 Vol-% nicht überschritten werden sollte. Hierbei ist berücksichtigt, daß Wasserdampf mit stets mehr als 2 Mol/1 Mol TiCl₄ vorhanden ist und an der Gesamtmenge der übrigen Gase teilhat.

Mit zunehmender Reaktionsdauer überziehen sich die organischen Farbpigment-Plättchen mit einem in seiner Dicke anwachsenden TiO₂- bzw. Fe₂O₃-Belag, wobei mit zunehmender Dicke sich die Farben der Pigmente ändern. So zeigen z.B. mit TiO₂ beschichtete β-Kupferphthalocyanin-Pigmente zunächst eine blau-violette, dann blaue, grüne, goldene und wieder violette Farbe. Einen ähnlichen Farbverlauf zeigen die mit Fe₂O₃-belegten β-Kupferphthalocyanin-Pigmente.

Es ist auch möglich, nach dem erfindungsgemäßen Verfahren TiO₂- und Fe₂O₃-Schichten zu kombinieren. So läßt sich ein TiO₂-belegtes β-Kupferphthalocyanin-Pigment mit violetter Farbe durch Weiterbelegung mit Fe₂O₃ in ein blau-graues Pigment umwandeln. Auch eine Umkehrung der Schichtenfolge (zuerst Eisen-, dann Titanoxid) bzw. das Aufbringen von mehrfachen Doppelschichten ist ohne Schwierigkeiten möglich. Aus Gründen der Wetterechtheit wird jedoch bei Pigmenten für Außenanwendungen ein äußerer Oxidfilm aus Fe₂O₃ bevorzugt. Eine zusätzliche Oberflächenbehandlung zur Verbesserung der Dispergiereigenschaften, der Ausrichtbarkeit, des Glanzes und der Wetterechtheit der Pigmente mit den bekannten anorganischen und organischen Belegmitteln, z.B. SiO₂ oder Fettsäuren, ist möglich.

Die Charakterisierung der nach obigen Verfahren hergestellten Interferenz/Absorptions-Pigmente zeigt homogene und gleichmäßige Oxidschichten auf den organischen Farbpigmentträgern. Die Oberfläche der Beschichtung ist glatt. Die Beschichtungen selbst bestehen aus dichten, polykristallinen Oxiden, z.B. TiO₂ und Fe₂O₃. Eine kristallographische Vorzugsrichtung ist nicht zu erkennen. Die Farbe der Pigmente ist schichtdickenabhängig. Sie ändert sich außerdem, wie bei Interferenzpigmenten zu erwarten, mit dem Bobachtungswinkel (Farbtonflop).

Röntgenographisch lassen sich bei alternierend beschichteten organischen Farbpigmenten die einzelnen Oxide als separate Phasen nachweisen. Bewitterungsversuche zeigten, daß Pigmente, die als äußerste Schicht eine Fe₂O₃-Phase aufweisen, hervorragend wetterecht sind, so daß sie im Außenbereich z.B. für die Herstellung von Automobillackierungen eingesetzt werden können. Hierfür spricht auch das gute Deckvermögen der Pigmente. Die erfindungsgemäßen Glanzpigmente können neben der Pigmentierung von Lacken, aber auch zum Einfärben von Kunststoffen, Druckfarben und kosmetischen Produkten verwendet werden.

Die folgenden Versuche erläutern beispielhaft die Erfindung.

In den nachstehend beschriebenen Beispielen wurde folgende Apparatur benutzt:
Mit Infrarot-Strahlern beheizbarer Wirbelreaktor (Durchmesser 6 cm, Länge 120 cm) aus Glas mit konischem Gaseintritt an der Unterseite und mit Stickstoffpulsen abreinigbaren Filterstrümpfen aus Polytetrafluorethylen-Nadelfilz an der Oberseite mit zwei seitlich auf ein Drittel Höhe angebrachten Zweistoff-Düsen.

### Beispiel 1

In den Wirbelbettreaktor werden 250 g plättchenförmiges β-Kupferphthalocyanin (BET-Oberfläche 3m²/g) mit den mittleren Abmessungen (Breite, Länge, Dicke) von jeweils 10, 50 und 0,5 µm eingefüllt. Durch Einblasen von 600 l/h Luft, die durch auf 50°C erwärmtes Wasser geleitet wird, am konischen Wirbelreaktoreingang wird das Produkt fluidisiert und durch Strahler auf Temperaturen zwischen 195 und 225°C erwärmt. Nach Erreichen dieser Temperatur wird ein Stickstoffstrom von 300 l/h, der durch Einleiten in einen mit TiCl₄ gefüllten, auf 65°C temperierten Sättigerkolben mit TiCl₄ beladen ist, durch eine Düse in den Ofen geblasen. Das TiCl₄ reagiert mit dem durch den Luftstrom eingebrachten Wasserdampf zu TiO₂ und HCl. Unter den gewählten Reaktionsbedingungen scheidet sich das gebildete TiO₂ spontan als Film auf den β-Kupferphthalocyanin-Plättchen ab. Insgesamt werden über einen Zeitraum von 6 Stunden 160 ml TiCl₄ in das Wirbelbett eingetragen, wobei alle 10 ml eine Pigmentprobe entnommen wird. Im Verlauf der Beschichtung ist eine starke Farbänderung von violett über blau, grün, gold und dann wieder zu violett zu erkennen. Anschließend wird ein Stickstoffstrom von 300 l/h, der durch Einleiten in einen mit Fe[CO]₅ gefüllten, auf 65°C temperierten Sättigerkolben mit Fe[CO]₅ beladen ist, durch eine Düse in den Reaktor geblasen. Das Fe[CO]₅ reagiert mit dem Sauerstoff des Luftstromes zu Fe₂O₃ und CO. Unter den gewählten Reaktionsbedingungen scheidet sich das gebildete Fe₂O₃ spontan als Film auf den TiO₂-belegten β-Kupferphthalocyanin-Plättchen ab. Insgesamt werden über einen Zeitraum von 3 Stunden 50 ml Fe[CO]₅ in das Wirbelbett eingetragen. Im Verlauf dieser zweiten Beschichtung ändert sich der Farbton von violett zu grau-blau.

Erhalten wird ein Pigment mit 18,3 Gew.% Ti und 5,3 Gew.% Fe.

Die mikroskopische Untersuchung des Pigmentes läßt erkennen, daß die Beschichtung des β-Kupferphthalocyanin-Substrates mit den Metalloxiden in Form eines glatten Filmes erfolgt ist, der das Substrat homogen überzieht. Nicht filmartig abgeschiedene TiO₂- bzw. Fe₂O₃-Partikel oder insuläre Aufwachsungen sind nicht zu erkennen. Die Pigmente zeigen eine starke grau-blaue Eigenfarbe bei hohem Glanz. Eine Änderung der Teilchengröße ist bei der CVD-Beschichtung nicht eingetreten.

Die röntgenographische Untersuchung zeigt β-Kupferphthalocyanin, Anatas und Hämatit.

### Beispiel 2

In den Wirbelbettreaktor werden 250 g des in Beispiel 1 eingesetzten plättchenförmigen β-Kupferphthalocyanins eingefüllt und wie in Beispiel 1 beschrieben, nur mit TiO₂ beschichtet. Insgesamt werden über einen Zeitraum von 1,5 Stunden 40 ml TiCl₄ in das Wirbelbett eingetragen. Das so hergestellte Pigment zeigt eine grüne Farbe.

Erhalten wird ein Pigment mit 6,6 Gew.% Ti.

Die mikroskopische Untersuchung des Pigmentes läßt erkennen, daß die Beschichtung des β-Kupferphthalocyanin-Substrates mit TiO₂ in Form eines glatten Filmes erfolgt ist, der das Substrat homogen überzieht. Nicht filmartig abgeschiedene TiO₂-Partikel oder insuläre Aufwachsungen sind nicht zu erkennen. Die Pigmente zeigen eine starke grüne Eigenfarbe bei hohem Glanz. Eine Änderung der Teilchengrößen ist bei der CVD-Beschichtung nicht eingetreten.

Die röntgenographische Untersuchung zeigt β-Kupferphthalocyanin und Anatas.

### Beispiel 3

In den Wirbelbettreaktor werden 250 g des in Beispiel 1 eingesetzten plättchenförmigen β-Kupferphthalocyanins eingefüllt und wie in Beispiel 1 beschrieben, nur mit Fe₂O₃ beschichtet. Insgesamt werden über einen Zeitraum von 3 Stunden 50 ml Fe[CO]₅ in das Wirbelbett eingetragen. Das so hergestellte Pigment zeigt eine grüne Farbe.

Erhalten wird ein Pigment mit 8,4 Gew.% Fe.

Die mikroskopische Untersuchung des Pigmentes läßt erkennen, daß die Beschichtung des β-Kupferphthalocyanin-Substrates mit Fe₂O₃ in Form eines glatten Filmes erfolgt ist, der das Substrat homogen überzieht. Nicht filmartig abgeschiedene Fe₂O₃-Partikel oder insuläre Aufwachsungen sind nicht zu erkennen. Die Pigmente zeigen eine starke grüne Eigenfarbe bei hohem Glanz. Eine Änderung der Teilchengrößen ist bei der CVD-Beschichtung nicht eingetreten.

Die röntgenographische Untersuchung zeigt β-Kupferphthalocyanin und Hämatit.

### Beispiel 4

Durch Absieben von kommerziellem Fluororubin-Pigment (C.I. Pigment Yellow 187) mit einem 325 Mesh Sieb wird grobteiliges Pigment mit den mittleren Abmessungen (Länge, Breite, Dicke) von jeweils 60, 5 und 1 µm und einer BET-Oberfläche von 2 m²/g gewonnen. Dieses Pigment wird analog Bsp. 1 im Wirbelbett innerhalb von 1,5 Stunden mit TiO₂ im Wirbelbett beschichtet.

Erhalten wird ein Gelbpigment, das nach üblichen Methoden in Lack eingearbeitet, deutlich wahrnehmbare Partikelstruktur zeigt. Das Pigment enthält 4 Gew.% Ti und hat seinen gelben Farbton im wesentlichen erhalten.

### Beispiel 5

Plättchenförmiges rotes Perylen (Perylimid-2-methyl-5-chloranilin), das man in der Finishstufe bei 180°C in einem Lösungsmittelgemisch aus 20 Vol.% N-Methylpyrrolidon und 80 Vol.% H₂O unter dem sich entwickelnden Eigendruck des Lösungsmittels über 12 h behandelt, wird nach Abkühlung und Trocknen der Pigmentkristalle, wie in Beispiel 1 beschrieben, mit Fe₂O₃ innerhalb von 1 Stunde beschichtet. Die Plättchen haben mittlere Abmessungen (Länge, Breite, Dicke) von jeweils 50, 10 und 0,5 µm bei einer BET-Oberfläche von 2,5 m²/g.

Das so hergestellte Pigment zeigt rote Farbe, enthält 3 Gew.% Fe und weist nach üblichen Methoden in Kunststoff eingearbeitet, den Effekt deutlich sichtbarer Einzelpartikel auf.

## Patentansprüche

1. Glanzpigment, bestehend aus einem farbigen plättchenförmigen Träger und darauf aufgebrachten filmartigen Umhüllungen aus Metalloxiden, dadurch gekennzeichnet, daß der Träger ein plättchenförmiges organisches Farbpigment ist.

2. Glanzpigment nach Anspruch 1, dadurch gekennzeichnet, daß das organische Farbpigment β-Kupferphthalocyanin ist.

3. Glanzpigment nach Anspruch 1, dadurch gekennzeichnet, daß die Pigmente mehrere Umhüllungen aus alternierenden Schichten verschiedener Metalloxide enthalten.

4. Verfahren zur Herstellung der Glanzpigmente nach Ansprüchen 1 bis 3, dadurch gekennzeichnet, daß man die filmartigen Umhüllungen aus Metalloxiden auf das organische plättchenförmige Farbpigment durch Umsetzung von gas- oder dampfförmigen Verbindungen der entsprechenden Metalle mit einer Reaktionskomponente die mit diesen Verbindungen in der Gasphase unter Bildung von Metalloxiden reagiert, erzeugt.

5. Verfahren nach Anspruch 4, dadurch gekennzeichnet, daß man als gas- oder dampfförmige Verbindungen der Metalle deren Chloride oder Carbonyle einsetzt und die Chloride durch Umsetzung mit Wasserdampf und die Carbonyle durch Umsetzung mit Sauerstoff in die entsprechenden Metalloxide überführt.

6. Verfahren nach Anspruch 4, dadurch gekennzeichnet, daß das plättchenförmige organische Farbpigment β-Kupferphthalocyanin ist.

7. Verfahren nach Anspruch 5, dadurch gekennzeichnet, daß man als gas- oder dampfförmiges Chlorid TiCl₄ einsetzt.

8. Verfahren nach Anspruch 5, dadurch gekennzeichnet, daß man als gas- oder dampfförmiges Carbonyl Fe[CO]₅ einsetzt.

9. Verwendung der Glanzpigmente nach Ansprüchen 1 bis 3, in Lacken, Kunststoffen, Kosmetika und Druckfarben.

## Claims

1. A luster pigment comprising a colored plateletlike substrate and, applied thereto, filmlike coatings of metal oxides, characterized in that the substrate is a plateletlike organic color pigment.

2. A luster pigment as claimed in claim 1, characterized in that the organic color pigment is β-copper phthalocyanine.

3. A luster pigment as claimed in claim 1, comprising a plurality of coatings of alternating layers of different metal oxides.

4. A process of preparing a luster pigment as claimed in any of claims 1 to 3, characterized in that the filmlike coatings of metal oxides on the organic plateletlike color pigment are produced by reacting gaseous or vaporous compounds of the metals in question with a reactant with which these compounds react in the gas phase to form metal oxides.

5. A process as claimed in claim 4, characterized in that the gaseous or vaporous compounds of the metals are chlorides or carbonyls thereof and the chlorides are converted into the corresponding metal oxides by reaction with water vapor and the carbonyls by reaction with oxygen.

6. A process as claimed in claim 4, characterized in that the plateletlike organic color pigment is β-copper phthalocyanine.

7. A process as claimed in claim 5, characterized in that the gaseous or vaporous chloride used is TiCl₄.

8. A process as claimed in claim 5, characterized in that the gaseous or vaporous carbonyl used is Fe[CO]₅.

9. The use of the luster pigments of claims 1 to 3 in coatings, plastics, cosmetics and printing inks.

## Revendications

1. Pigment brillant, constitué d'un support coloré en forme de plaquette, sur lequel sont déposés des films d'enrobage constitués d'oxydes métalliques, caractérisé en ce que le support est un pigment coloré organique sous forme de plaquette.

2. Pigment brillant selon la revendication 1, caractérisé en ce que le pigment coloré organique est la β-cuprophtalocyanine.

3. Pigment brillant selon la revendication 1, caractérisé en ce que les pigments contiennent plusieurs enrobages de couches alternées de différents oxydes métalliques.

4. Procédé de préparation des pigments brillants selon les revendications 1 à 3, caractérisé en ce que l'on produit les films d'enrobage d'oxydes métalliques sur le pigment coloré organique sous forme de plaquette par réaction de composés à l'état de gaz ou de vapeur des métaux correspondants, avec un composant réactionnel qui réagit avec ces composés en phase gazeuse en formant des oxydes métalliques.

5. Procédé selon la revendication 4, caractérisé en ce que l'on introduit, en tant que composés à l'état de gaz ou de vapeur des métaux, leurs chlorures ou leurs composés carbonyle, et en ce que l'on transforme les chlorures par réaction avec de la vapeur d'eau et les composés carbonyle par réaction avec l'oxygène en les oxydes métalliques correspondants.

6. Procédé selon la revendication 4, caractérisé en ce que le pigment coloré organique sous forme de plaquette est la β-cuprophtalocyanine.

7. Procédé selon la revendication 5, caractérisé en ce que l'on introduit, en tant que chlorure à l'état de gaz ou de vapeur, TiCl₄.

8. Procédé selon la revendication 5, caractérisé en ce que l'on introduit, en tant que composé carbonyle à l'état de gaz ou de vapeur, Fe[CO]₅.

9. Utilisation des pigments brillants selon les revendications 1 à 3, dans des vernis, des matières synthétiques, des produits cosmétiques et des encres d'imprimerie.
